# EUROPEAN PATENT APPLICATION

(11) **EP 1 516 797 A2**
(43) Date of publication of application: **23.03.2005**
(21) Application number: 04103771.4
(22) Date of filing: 05.08.2004
(51) Int. Cl.: B62B 5/02, A61G 5/06

(54) **Stair climbing device**

(30) Priority: 17.09.2003 IT BO20030540
(71) Applicant: T.G.R. S.r.l., 40064 Ozzano Emilia (IT)
(72) Inventor: TOSELLI, Emilio, 40068, SAN LAZZARO DI SAVENA (IT)
(74) Representative: Porsia, Dino, Dr.

(57) **Abstract**

The apparatus for the motorized driving at constant speed of stair-climbing carriages with wheel clusters, for transporting commercial loads, or carriages used in the manufacture of wheelchairs for the disabled, is of the type in which the axle (1) with the wheel clusters (2, 3) at its ends is operated by a motor/gearbox assembly (10, 14) with a direct-current electric motor (14) with two directions of rotation. The apparatus comprises means of any suitable type (19) that detect the speed of rotation of at least one preferably fast point of the kinematic chain connected to the said motor (14) and that generates an electrical signal proportional to this speed which is sent to a control unit (16) designed to ensure that when travelling up or down stairs, the axle (1) of the carriage rotates at a predetermined speed that is as far as possible constant.

## Description

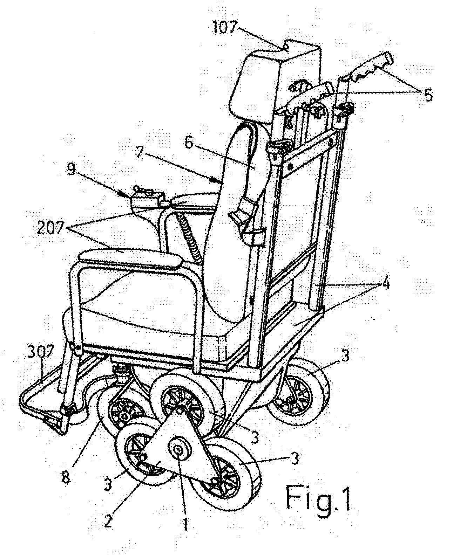

The invention relates to stair-climbing carriages of the type illustrated in Figure 1 of the accompanying drawings, equipped with an axle 1, integral with the ends of which are pairs of plates 2, for example in the shape of an equilateral triangle, a three-point spider or some other shape, hereinafter referred to as spiders, which are aligned with each other such that their bases are on corresponding planes and which carry, rotatably on each vertex, tyred wheels 3, of equal diameters, that form on the ends of the axle the so-called wheel clusters 3. The axle 1 is mounted rotatably beneath the lower part of an L-shaped frame 4 which also supports the motor/gearbox assembly that turns the same axle and the electric storage batteries for powering the motor/gearbox assembly, which uses a direct-current motor, with two directions of rotation and with a brake. At the top of the vertical part of the frame 4 are height-adjustable handles 5 which are grasped by an operator when the carriage is travelling up or down stairs, with the wheel clusters 3 meshing with the steps of the stairs, rather like the teeth of a gearwheel machine with the teeth of a rack. The weight to be carried up or down the stairs is mounted on the frame 4 and secured to it with the belts 6 provided. A motorized carriage of this type has been disclosed in Italian Utility Model Registration No. 186 026 dated 20.11.1981, which is referred to here in full. This type of carriage has been used to create a motor wheelchair for the disabled, which, as illustrated in Figure 1, possesses fixed to the frame 4 a comfortable armchair 7 with adjustable headrest 107, armrests 207 and a footrest 307 which can also be adjusted. Underneath the horizontal part of the chair, immediately behind the footrest and in a central position is a tyred wheel 8 on a horizontal axis jointed to a vertical axis and served by two electric motors, one for forward and the other for reverse travel and for steering to the right or left. These motors are controlled by the person sitting on the chair using commands 9 located usually on one of the armrests of the chair.

In this type of carriage or wheelchair, the motorized driving of the axle 1 while travelling downstairs, is subordinated to the control of a single-pole double-throw microswitch which by means of a system of eccentrics detects when two of the wheels of each spider are resting on consecutive steps of the stairs, in which case it causes the axle to rotate, whereas when it detects that one of the wheels is resting on a step and the axle 1 passes over the vertical plane containing the axis of the wheel currently on the floor, it causes the motor to operate as a generator and connects it to a rheostat by means of which it is possible to control the speed of descent of the carriage while the motor is being used as an electro-magnetic brake. This system turns the axle 1 of the carriage not at a constant speed but with small and continuous accelerations and decelerations. Even when climbing stairs, when the motor that turns the axle 1 is required to rotate in the appropriate direction for this purpose, the rotation occurs with continuous decelerations and accelerations, the former in the climbing phase, during which the axle 1 is moving towards the vertical plane containing the axis of the pair of wheels currently on the floor, and the latter when the axle has passed this condition of verticality and equilibrium, after which the carriage's own weight and that of the transported load tend to accelerate the said rotation of the motor. These continuous accelerations and decelerations severely test the kinematic chain turning the wheels and give the operator an understandable sense of insecurity when operating the carriage on stairs. This necessitates a sufficient period of training during which the operator has to acquire the "feel" for how the carriage handles.

It is an object of the invention to remedy these limitations of the prior art, with the following idea for a solution. The system controlling the motor for turning the axle 1 is fitted with means for detecting the speed of rotation of this motor and these means are used to ensure that, whether ascending or descending the stairs, the said motor is turned at an approximately constant predetermined speed, by the use of means which throttle appropriately and automatically both the electric power to the motor and the degree of electromagnetic braking when this motor is used as a generator and as an electromagnetic brake.

Other features of the invention, and the advantages procured thereby, will become clearer in the course of the following description of a preferred embodiment thereof, illustrated purely by way of non-restrictive example, in the figures of the attached sheets of drawings, in which, besides the already considered Figure 1:
- Fig. 2 is a front view with some parts in section of the motorized driving and braking system for the carriage wheels;
- Fig. 3 is a side view of a group of wheels mounted on a spider, with the cam and microswitch assembly which detects its position with respect to the horizontal plane;
- Fig. 4 is a diagrammatic side view of the safety device that locks the input sprocket of the speed reducer which drives the carriage axle, in the event of breakage of the belt or other means connecting the said sprocket to the electric drive motor;
- Fig. 5 is a composite diagrammatic view of the brake means of the wheels mounted on the arms of the spiders at each end of the carriage axle;
- Fig. 6 is a flowchart showing the operation of the carriage when ascending or descending stairs;
- Figs. 7a, 7b, 7c are side views of three different operational situations of the carriage when descending stairs, each of which corresponds to a different working condition of the motor turning the axle and wheel clusters;
- Figs. 8a, 8b are side views of two different operating situations of the carriage when ascending stairs, which correspond to a single working condition of the main motor for turning the wheel clusters of the said carriage.

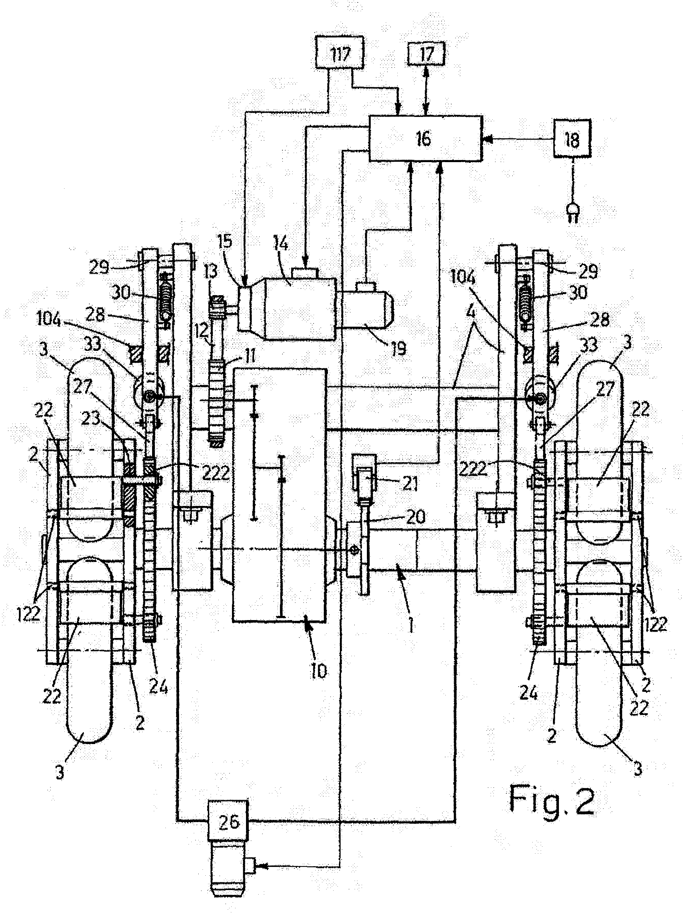

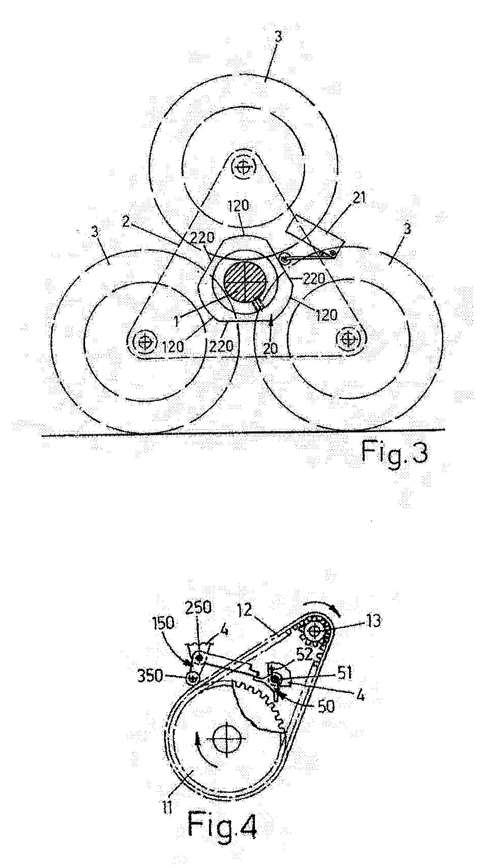

In Figure 2, the reference 10 denotes the speed reducer mounted by its casing to the frame 4, its slow output keyed to the axle 1, while keyed to its fast input is a sprocket 11 connected by means of a toothed belt 12 to the small sprocket 13 keyed to the shaft of a direct-current electric motor 14 which is likewise mounted via its casing to the frame 4 and fitted with a normally on electromagnetic brake 15. The assembly 14, 15 is controlled by an electronic control unit 16 connected to a unit 17 for selecting the phase of travel and to a unit 117 for driving the selected phase of travel, all these units being controlled by the operator who is controlling the carriage as it moves up or down stairs. Reference 18 denotes diagrammatically the power unit consisting of the electric storage batteries and their recharging system. The control unit 16 is also informed of the speed of rotation of the motor 14, for example via a tachometric dynamo 19 or other encoder of any suitable type capable of generating an analogue or digital electrical signal proportional to the speed of rotation of the motor 14 shaft. For this purpose the use is also permitted of electronic means capable of detecting the time-related commutations in the connection of the brushes to the commutator of the motor 14. The control unit 16 is also informed of the angular position of the spiders 2 and this information is supplied by a cam 20 (visible also in Figure 3) keyed to the axle 1, which has relief protrusions 120 rounded concentrically with the axle 1 and of suitable amplitude, separated by identical linear recessed zones 220. The said protrusions 120 are lined up with the arms of the supports 2 and the profile of the cam is detected by a microswitch 21 mounted on the frame 4 or on parts of the latter joined and electrically connected to the control unit 16. When two consecutive wheels of each pair of supports 2 are resting on the floor, the microswitch 21 detects for example one of the recessed zones 220 of the cam 20.

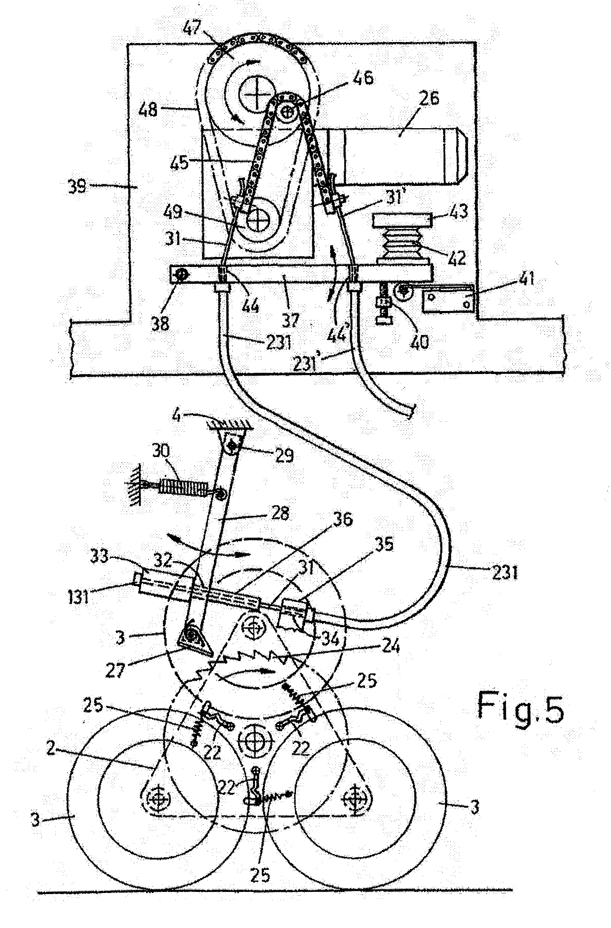

The control unit 16 also governs the operation of the braking device of the wheel clusters 3 of the two pairs of spiders 2, a device constructed on the principle disclosed in Italian Patent No. 1 213 961, also belonging to this applicant, improved in the remote-acting servocontrols, for example as now disclosed with reference to Figures 2 and 5. The device comprises brake pads 22, at least one per wheel 3, arranged transversely inside each pair of spiders 2, adjacent to the tread of each wheel, and taking the form of strong metal plates of e.g. rectangular shape, ribbed, pivoting at end protrusions 122 at one end in corresponding supporting holes in the spiders 2 and having at their other end at least one lateral protrusion 222 that passes through a slot 23 in the inner one of the spiders 2 and that must be hinged to an outer disc 24 mounted rotatably on the axle 1. Elastic means 25 stress the pads 22 to pivot into the rest position while a centralized motor/gearbox assembly 26, under the control of the control unit 16, is used to rotate the disc 24 in the direction that pivots the pads 22 so that they lock the wheel clusters 3. As the detail of Figure 5 shows, the disc 24 has for example peripheral sawteeth engageable on command by the spring-loaded pivoting pawl 27 on the end of a lever 28 which is pivoted at 29 to a protrusion of the frame 6, on an axis parallel to the axle 1. The lever 28 is stressed towards the rest position by a spring 30 and connected, at a point a short distance from the pawl 27, to a cable 31, of for example steel, connected to the drive system connected to the motor/gearbox assembly 26. The reference 104 denotes diagrammatically the guide means attached to the frame 4, to prevent the lever 28 making undesirable sideway movements. The cable 31 passes through a hole 32 in the lever 28, through an elastomeric block 33 which bears on the same side of the lever as the spring 30, its head 131 bearing via an interposed washer on the said block. On the other side of the lever 28, the cable 31 passes through the hole 34 in an end stop 35 attached to the frame 4, and the sheath 231 in which the said cable slides bears against this end stop 35. A distance bush 36 on the length of cable running between the end stop 35 and the lever 28 has the function of limiting the braking stroke of the lever 28 (see below). The sheaths 231, 231' originating from the two wheel clusters 3 lead to the top and rear of the frame 4, which in front supports the backrest of the chair 7, and here the ends of the sheaths bear on one side of a lever 37 pivoting at 38 on a structure 39 which is fixed to the said frame and supports the motor/gearbox assembly 26 at the opposite end from the pivot, the lever 37 normally rests on an adjustment mechanism 40 located on the same side as the sheaths 231, 231' and operates a microswitch 41 under the action of a series of diaphragm springs 42 acting between an end plate 43 and the same lever 37 which contains holes 44, 44' through which run the cables 31, 31', the latter being fixed to the ends of a length of chain 45. This chain 45 passes around a sprocket 46 mounted rotatably and eccentrically on a larger-diameter sprocket 47, which in turn rotates on the structure 39 and which is connected by means of an endless chain 48 and a sprocket 49 to the slow output shaft of the electric motor/gear-box assembly 26, the motor of which is able to turn in both directions. When the motor/gearbox assembly 26 is activated to raise the sprocket 46 connected to the cables 31, 31', the springs 42 are such that the lever 37 remains stationary and the blocks 33 are stiff enough to allow immediate pivoting of levers 28 in the anticlockwise direction (when viewing Figure 5), resulting in the pawl 27 engaging with the teeth of the disc 24, and pivoting of the shoes 22 in the direction that causes braking of the wheel clusters 3. When the brakes are applied, the distance piece 36 touches the end stop 35 and the blocks 33 are compressed to allow a further lifting travel of the cables and when the blocks become rigid, the sheaths 231, 231' lift with the cables, causing a slight upward pivoting of the lever 37 in opposition to the springs 42. The microswitch 41 immediately detects this lifting and stops the motor/gearbox assembly 26. The brake system is released by reversing the direction of rotation of the motor/gearbox assembly 26 and with the opposite movements to those described.

The motorized driving of the present carriage comprises, lastly, a safety device as in Figure 4 to automatically prevent the input sprocket 11 of the speed reducer 10 rotating if the toothed belt 12 breaks. The device in question comprises, adjacent to that part of the sprocket 11 which is not engaged by the belt 12, a pawl 50 pivoted at an intermediate point 51, on an axis parallel to the axis of the sprocket, to a support fixed to the frame 4 and this pawl is stressed by a spring 52, which may be a helical torsion spring, in such a way that one end of this pawl is pushed into engagement with the teeth of the said sprocket 11 to prevent it rotating in the direction which would result in the carriage descending the stairs under gravity, bearing in mind that when negotiating stairs it is always the rear raised part of the frame 4 which is oriented towards the top, both when ascending and when descending the stairs. In normal situations, the pawl 50 is kept disengaged from the sprocket 11, by the end of a lever feeler 150 pivoting at an intermediate point 250 on the frame 4 of the carriage and carrying a roller 350 at one end which acts on a portion of the belt 12 close to the sprocket 11 or preferably above this sprocket, so as not to detect the oscillations of the adjacent lengths of the same belt. If the belt 12 breaks, the pawl 50 pivots clockwise (when viewing Figure 4) and engages with the sprocket 11 to prevent it rotating in the anticlockwise direction which would correspond to movement of the speed reducer 10 when descending the stairs.

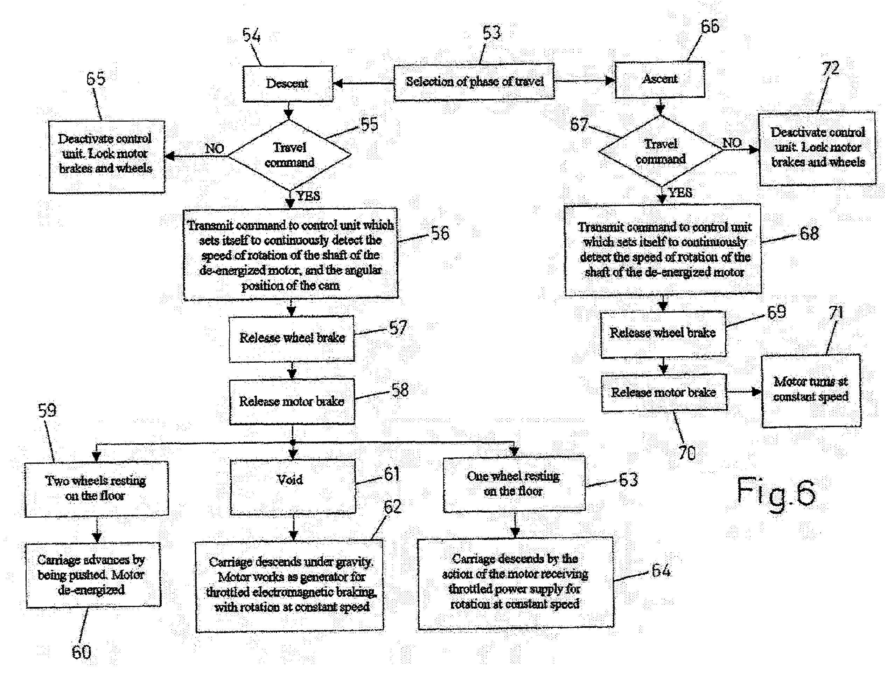

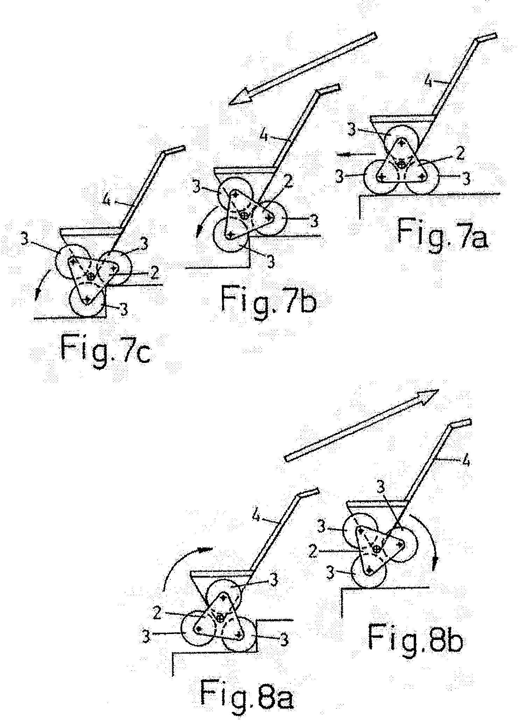

Referring to Figures 6, 7 and 8, a description will now be given of how the carriage works when going up or down stairs. By means of the controls 17 shown in Figure 2, in phase 53 the phase of travel of the carriage is selected, e.g. the descent phase 54. By means of the control 117 shown in Figure 2, which is preferably a pushbutton, the operator selects the phase 55 of travel of the carriage. If this phase is active, the phase 56 is made active, which transmits the travel command to the control unit 16 of Figure 2 which, by means of the encoder 19, continuously detects the speed of rotation of the motor 14 shaft, which is now de-energized and which by means of the microswitch 21 continuously detects the angular position of the cam 20. Phase 56 is followed by the phase 57 in which the brake is removed from the wheels 3 by means of the motor/gearbox assembly 26, and then by the phase 58 in which the motor brake 15 is released. At this point the motor 14 can act in the following ways. If the carriage is in the condition shown in Figure 7a, with two of the wheels 3 resting on the floor, the phase 59 is followed by the phase 60, in which the motor 14 is de-energized and the carriage can advance when pushed by the operator. If however, the carriage is in the phase indicated in Figure 7b, with one of the wheels resting on one step and the front wheel falling off the edge of this step, the phase 61 is followed by the phase 62 in which the carriage descends under gravity, while the motor 14 is automatically caused by the control unit 16 to operate as a generator and is connected for electromagnetic braking to a load with an automatically variable and throttled value, for example by chopper systems, in such a way that the motor 14 turns at constant speed. If on the other hand the carriage is in the condition shown in Figure 7c, with a lower wheel resting on the floor and with the uphill wheel about to leave and the downhill wheel about to reach the floor, the phase 63 is followed by the phase 64 in which the carriage descends by the action of the motor 14, which is subjected by the unit 16 to a throttled power supply, for example by chopper systems, for rotation at constant speed, in the appropriate direction for descending the stairs.

As soon as the travel control 117, Figure 2, is released, the phase 55 in Figure 6 is followed by the phase 65, in which the control unit 16 is deactivated and both the motor brake 15 and the wheel cluster 3 braking system connected to the motor/gearbox assembly 26 are automatically locked.

If the phase 53 of selection of the travel phase is followed by the phase 66 of ascent and this in turn by the phase 67 in which travel is selected, as long as this phase remains active the command is transmitted to the control unit 16, which, by means of the encoder 19, is able to continuously detect the speed of rotation of the motor shaft, now immobilized, as indicated by the phase 68. This phase is followed by the phase 69 which releases the brake from the wheel clusters 3; then the phase 70 which releases the brake 15 from the motor 14; and then the phase 71 which turns the motor 14 at a constant speed, whether the carriage is in the disadvantageous condition of Figure 8a, where the rotation of the motor must also overcome the weight of the carriage during the lifting phase, or whether the carriage is in the advantageous condition of Figure 8b, where the rotation of the motor tends to be accelerated by the weight of the carriage in the lowering phase.

As soon as the operator leaves the travel command 117 of Figure 2, the phase 67 of Figure 6 is followed by the phase 72 in which the control unit 16 is deactivated and both the motor brake 15 and the wheel cluster 3 brake connected to the motor/gearbox assembly 26 are locked.

The manner in which the carriage travels on the level, supported on the floor by only one wheel 3 of each spider 2 and in which the rotation and steering motors connected to the front wheel 8 are activated, will not be dealt with here as this takes place in the usual manner. In this phase the motor 14 is de-energized and the brake 15 is active. The brakes of the wheel clusters 3 may be designed to activate automatically whenever the user stops the forward travel and/or the steering of the wheelchair, and/or they may be designed to activate on command.

## Claims

1. Apparatus for the motorized driving of stair-climbing carriages with wheel clusters, for transporting commercial loads, or carriages used in the construction of wheelchairs for the disabled, of the type in which the axle (1) with the wheel clusters (2, 3) at its ends is operated by a motor/gearbox assembly (10, 14) with a direct-current electric motor (14) with two directions of rotation, which apparatus is **characterized in that** it comprises means of any suitable type (19) that detect the speed of rotation of at least one preferably fast point of the kinematic chain connected to the said motor (14) and that generates an electrical signal proportional to this speed which is sent to a control unit (16) designed to ensure that when travelling up or down stairs, the axle (1) of the carriage rotates at a predetermined speed that is as far as possible constant.

2. Apparatus according to Claim 1, in which the said speed detection means are set up to detect the speed of rotation of the said electric motor.

3. Apparatus according to Claim 2, in which the speed detection means consist of a tachometric dynamo (19) connected coaxially to the motor (14).

4. Apparatus according to Claim 2, in which the said speed detection means comprise electronic means that detect the frequency of the commutations in the functional connection between the brushes and the commutators of the motor (14).

5. Apparatus according to Claim 1, in which the control unit (16) also receives the information about the angular position of the wheel clusters (3) of the carriage, for which purpose it is connected electrically to a microswitch (21) mounted on the carriage frame and by means of its follower detects the highs and lows of a cam (20) keyed to the axle (1) of the carriage and equivalent in shape to the wheel clusters (3), with all the vertices (120) rounded and angularly equidistant from each other.

6. Apparatus according to Claim 1, in which the electric motor (14) has a normally active electromagnetic brake (15) on its shaft.

7. Apparatus according to Claim 1, in which the wheel clusters (3) have collective braking means (26).

8. Apparatus according to the preceding claims, **characterized in that** for the phase of going downstairs it comprises:
- means (17) for selecting the phase of travel of the carriage on the stairs, which means are set for the descent phase;
- a control (117), preferably a pushbutton, which is actuated by the operator to begin the descent travel of the carriage;
- means for actuating the actuator (26) to release the brake from the wheel clusters (3);
- means for ensuring that following actuation of the travel command (117), the electromagnetic brake (15) of the motor (14) is neutralized;
- means that transmit the travel command to the control unit (16) which, by means of the encoder (19), continuously detects the speed of rotation of the shaft of the motor (14) and which, by means of the microswitch (21), continuously detects the angular position of the phase cam (20) keyed to the axle (1) of the carriage;
- means for ensuring that if the carriage has two wheels (3) of each cluster resting on the floor, the motor (14) is de-energized and the carriage can advance by being pushed by the operator;
- means for ensuring that if the carriage has one of the wheels (3) of each cluster resting on a step and with a following wheel is falling from this step, the motor (14) is set automatically to function as a generator and is connected to exercise an electromagnetic braking action, on a load of a value that is automatically variable and throttled for example by chopper means, in such a way that the motor shaft rotates at constant or approximately constant speed; and
- means for ensuring that if the carriage is resting on a step via one wheel of each cluster, while the other wheels are located above that wheel, the supply to the motor (14) is throttled for example by chopper means, in such a way that its shaft rotates at a constant or approximately constant speed.

9. Apparatus according to the preceding claims, **characterized in that** for the phase of going upstairs it comprises:
- means (17) for selecting the phase of travel of the carriage on the stairs, which means are set for the phase of going up the said stairs;
- a control (117), preferably a pushbutton, which is actuated by the operator to begin the phase of travel of the carriage;
- means for ensuring that following actuation of the said travel command, the braking system (26) of the wheel clusters (3) and the brake (15) of the motor (14) are deactivated;
- means for transmitting the travel command to the control unit (16) which, by means of the encoder (19), continuously detects the speed of rotation of the shaft of the motor and which supplies the latter via throttling systems of for example chopper type, in such a way that the shaft of the said motor rotates at an approximately constant speed.

10. Apparatus according to Claims 6 and 7, **characterized in that** it comprises safety means ensuring that if the operator leaves the travel command (117), the motor (14) stops and both the brake (15) on the said motor (14), and the command (26) to brake the wheel clusters (3) are automatically activated.

11. Apparatus according to Claim 7, in which the collective braking means of the wheel clusters (3) comprise pads (22), at least one per wheel, the pads being arranged transversely inside each pair of spiders (2), adjacent to the tread of each wheel, and taking the form of strong metal plates pivoting at their end protrusions in corresponding supporting holes in the pairs of spiders and having at least one lateral protrusion (222) that passes through a slot (23) in the inner one of the pair of spiders (2) and that is hinged to an outer disc (24) mounted rotatably on the carriage axle (1), elastic means (25) being provided to stress the said pads towards the rest position, while a centralized motor/gearbox assembly (26), under the control of the control unit (16), is used to rotate the said disc (24) in such a direction as to move the pads (22) to the position in which the wheel clusters (3) are locked.

12. Apparatus according to Claim 11, in which the said disc (24) has peripheral sawteeth engageable on command by the spring-loaded pivoting pawl (27) on the end of a lever (28) which is pivoted to a protrusion of the frame (4) on an axis parallel to the axle (1) of the carriage, the said lever being stressed towards the rest position by an opposing spring (30), being guided by suitable means (104) against movements other than pivoting movements and being connected at a point a short distance from the said pawl to a cable (31), of for example steel, connected to a drive system connected to the said motor/gearbox assembly (26).

13. Apparatus according to Claim 12, in which the said steel cable (31) passes through a hole (32) in the said lever (28), through an elastomeric block (33) which bears on the same side of the said lever (28) as the opposing spring (30), and by means of its head bearing via an interposed washer on the said block, while on the other side the same cable passes through the hole (34) in an end stop (35) attached to the frame (4) of the carriage and the sheath (231) in which the said cable slides bears against this end stop, and a distance bush (36) on the length of cable running between the end stop (35) and the lever (28) has the function of limiting the braking stroke of the lever (28).

14. Apparatus according to Claim 13, in which the sheaths (231, 231') originating from the two wheel clusters (3) lead to the top and rear of the carriage frame (4), where the ends of these sheaths bear on one side of a lever (37) pivoting at its end on a structure (39) fixed to the said frame and on which the centralized motor/gearbox assembly (26) for braking the wheel clusters is mounted, the said lever (37) being normally held, at the end remote from the pivot against an adjustment mechanism (40) located on the same side as the sheaths and against the movable part of a microswitch (41), by the action of elastic means (42) consisting for example of diaphragm springs acting between a fixed end plate (43) and the same lever (37) which contains holes (44, 44') through which run cables (31, 31') fixed to the ends of a length of chain (45) passing around a sprocket (46) mounted rotatably and eccentrically on a larger-diameter sprocket (47), which in turn rotates on the said structure (39) and is connected by means of an endless chain (48) and a sprocket (49) to the slow output shaft of the said electric motor/gearbox assembly (26), the motor of which is able to turn in both directions.

15. Apparatus according to Claim 1, in which the motorized driving system of the carriage comprises a drive consisting of a toothed belt (12) and sprockets (11, 13) between the electric motor (14), which has two directions of rotation, and the speed reducer (10) connected to the axle (1) of the said carriage, and comprises a safety device that automatically prevents the input sprocket (11) of the said reducer (10) rotating if the said belt breaks.

16. Apparatus according to Claim 15, in which the safety device comprises, adjacent to the part of the driven sprocket (11 ) of the reducer (10) that is not engaged by the toothed belt (12), a pawl (50) pivoted at an intermediate point on an axis parallel to the axis of the said sprocket, to a support fixed to the carriage frame (4), the said pawl being stressed by a spring (52) in such a way that one end of the said pawl is pushed into engagement with the teeth of the said sprocket to prevent it rotating in the direction which would result in the carriage descending the stairs under gravity if the opposite end of the said pawl is left free to pivot by a lever feeler (150) pivoting at an intermediate point on the carriage frame (4) and possessing at its other end a roller (350) that acts on a portion of the toothed belt (12) close to or above the said sprocket (11) of the reducer.
